# EUROPEAN PATENT APPLICATION

(11) **EP 4 819 208 A1**
(43) Date of publication of application: **07.10.2026**
(21) Application number: 25168507.9
(22) Date of filing: 04.04.2025
(51) Int. Cl.: H01M 4/04, H01M 4/139, H01M 4/62, H01M 4/36, H01M 10/0525, H01M 4/1397

(54) **COMPOSITION FOR PRODUCING AN ELECTRODE OF A BATTERY**

(71) Applicant: batene GmbH, 73240 Wendlingen am Neckar (DE)
(72) Inventor: MÖLLER, Martin, 52070 Aachen (DE)
(74) Representative: Manitz Finsterwald Patent- und Rechtsanwaltspartnerschaft mbB

(57) **Abstract**

The present invention relates to a composition for producing an electrode of a battery, comprising: (a) a binder comprising an ionomeric polymer, and (b) electrochemically active material particles, wherein the electrochemically active material particles are decorated with the ionomeric polymer. Further, the present invention concerns a method of producing such a composition, a use of an ionomeric polymer for producing a battery electrode, and a method of producing a battery electrode and a battery including such a composition.

## Description

The present invention relates to a composition for producing an electrode of a battery, to a method of producing the same, to the use of an ionomer for producing an electrode of a battery, and to a method of producing an electrode for a battery.

Electrochemical energy storage systems, such as batteries, are widely used to convert chemical energy directly into electrical energy. This energy conversion is based on galvanic cells, in which a redox reaction during discharge drives the flow of electrons from the anode to the cathode through an external circuit.

Rechargeable batteries, or accumulators, are designed to enable a reversible flow of electrons and ions upon application of an external voltage, thereby restoring the original chemical state.

A particularly significant class of rechargeable batteries is lithium-ion (Li-ion) batteries. These systems employ active materials capable of reversibly storing lithium ions. In the charged state, lithium ions and electrons are predominantly stored in the anode. Upon discharge, a thermodynamically favorable condition is established in which the lithium ions and electrons relocate to the cathode. Lithium ion transport within the cell occurs via diffusion through a liquid electrolyte, whereas electron transport proceeds via an external electric circuit.

Various configurations of lithium-ion batteries exist, distinguished by the nature of the active materials employed. Anode materials may include graphite, graphitized silicon, pure silicon, lithium titanate (Li₄Ti₅O₁₂), or lithium metal. Cathode materials are typically based on metal oxides, including lithium cobalt oxide (LCO), nickel manganese cobalt oxide (NMC), nickel cobalt manganese oxide (NCM), and lithium iron phosphate (LFP). Moreover, sodium-ion battery technologies are emerging as a cost-effective and lightweight alternative to lithium-based systems.

A critical component in these battery systems is the electrolyte, which must facilitate efficient ion transport while remaining stable and safe. Due to the moisture sensitivity of the cell components, non-aqueous electrolytes are typically required. Conventional low-molecular-weight liquid electrolytes, however, pose safety risks due to their flammability and propensity to trigger thermal runaway events. Progress has been made through the use of polymer electrolytes and, more recently, all-solid-state (ASS) electrolytes, particularly in the development of lithium-metal solid-state cells.

In all these configurations, it is essential that the active materials are electrically connected to a current collector. Current collectors are metallic conductors that serve to transport electrons between the external circuit and the active material. In conventional battery cells, the anode typically consists of a copper foil supporting a thin layer of active material, while the cathode comprises an aluminum foil similarly coated with a thin layer of metal oxide-based active material.

Due to the inherently limited conductivity of most active materials with respect to both electrons and lithium ions, the applied active material layers are generally maintained at a thickness below 100 µm. To achieve practical energy densities, such thin-layer electrodes must be assembled into multi-layer cell stacks, incorporating multiple alternating layers of copper, aluminum, and separator foils. While necessary for performance, these additional layers increase the mass and volume of the cell without contributing directly to its electrochemical capacity.

The active material layers, both in conventional and advanced designs including three-dimensional (3D) current collectors, are composed of particulate materials with granular morphologies. These particles are engineered for electrochemical energy storage and are held together via binder systems. The electrical and electrochemical performance of the cell, including charge density and cycling stability, is influenced not only by the choice of active material but also by the interconnection between the particles and their contact to the current collector.

For efficient operation, the binder must fulfill several roles: establishing conductive pathways between active material particles (via conductive additives), maintaining porosity for effective ion transport and securely binding particles of electrically active material to one another. The structure of the resulting porous network-defined by its pore volume, diameter, and tortuosity-plays a critical role in lithium ion mobility and overall cell resistance.

The internal resistance of the active material layer is significantly influenced by electron conductivity, ionic diffusion within the electrolyte, and interfacial ion transfer between electrolyte and particles. Accordingly, the binder composition and its application method are central to battery performance and cost-effective cell manufacturing.

Currently, the industry standard includes polyvinylidene fluoride (PVDF) for cathodes and carboxymethylcellulose (CMC), often in combination with styrene-butadiene rubber (SBR), for anodes. These binders are processed in slurry form with active materials and conductive carbon black (CB) additives. In the case of PVDF, the slurry is typically prepared using N-methylpyrrolidone (NMP), a toxic and potentially carcinogenic solvent. CMC-based slurries are generally water-based.

A drawback of current slurry-based methods is the risk of non-uniform binder and carbon black distribution during drying, leading to binder migration and structural heterogeneity. This can degrade mechanical integrity, reduce electrochemical performance, and accelerate aging. Additionally, PVDF has weak adhesion to carbon black particles, potentially increasing internal resistance due to inadequate electron pathways. To obtain a sufficient mechanical stability, adhesion and film formation, typically PVDF having a relatively high weight average molecular weight is required. This in turn makes it difficult or even impossible to process the binder under solvent-free conditions.

Therefore, there is a continuing need for improved binder systems that:
(i) are chemically inert to battery components;
(ii) form stable and conductive composites with electrically conductive additives, such as CB particles;
(iii) accommodate volume changes of the active material during cycling; and
(iv) maintain uniform distribution within the electrode structure with minimal binder content and no binder migration.

Preferably, such binders should further be free of per- and polyfluoroalkyl substances (PFAS), avoid the use of toxic solvents, or be processable in solvent-free systems. They should also support scalable, cost-effective manufacturing with low energy and equipment requirements.

The invention described herein solves the above problems by providing, a composition for producing an electrode of a battery, comprising: (a) a binder comprising an ionomeric polymer, and (b) electrochemically active material particles, wherein the electrochemically active material particles are decorated with the ionomeric polymer.

The ionomeric polymer acts as a binder for the electrochemically active material particles. With the ionomeric polymer on the surface of these particles, the ionomeric material connects the active material particles with one another, to form a stable active material layer, when heated above a melting point of the ionomeric polymer, in particular under pressure. A molecule of an ionomeric polymer has a macromolecular backbone with ionic groups provided along said backbone. These ionic groups are coordinated to counter ions, wherein the ionic groups on the polymer backbone and the corresponding counter ions form clusters. These clusters can be considered to constitute thermo-reversible crosslinks between the polymer backbones of the ionomeric polymer. At elevated temperature, the clusters of ionic groups and counter ions disintegrate, so that the ionomeric polymer can flow. The temperature at which this disintegration of said cluster occurs, i.e. at which the transition to a flowing material occurs, is herein referred to as the melting temperature of the ionomeric polymer. With the clusters being disintegrated, the macromolecular backbones of the ionomeric polymer are flexible and macromolecular backbones of ionomeric polymer provided on one particle of active material can easily entangle with the macromolecular backbones of ionomeric polymers provided e.g. on an adjacent particle of active material. Upon cooling, the mentioned clusters will form again and the ionomeric polymer material solidifies. Thereby, the particles of active material are attached to one another, i.e. the ionomeric polymer acts as a binder for providing a stable active electrode material. Especially for binders that are free of fluorocarbons a strong adhesion to active material particles and optiona additional additives could be observed, while at the same time having sufficient electrochemical stability to maintain functionality within a battery during cycling. Remarkably, it was observed that at usual temperatures at which secondary batteries, such as lithium ion batteries or sodium ion batteries, are operated, the thermoreversibly crosslinked ionomeric polymers provide for improved mechanical properties, regarding tensile strength, elasticity, and creep behavior, when compared to conventional high molecular weight PVDF binders. Furthermore, since the crosslinking in the ionomeric polymer is reversible, it is possible that the material exhibits self-healing properties. This is particularly of interest, since during cycling of a battery, the active material of the electrodes experiences significant volume changes. The self-healing properties of the ionomeric polymer can heal microcracks that may occur as a result of said volume change. It was further observed that with the binder based on an ionomeric polymer a binder migration, as is observed for conventional PVDF binders, can be avoided.

The balance of low viscosity when heated above their melting point, excellent binding properties to active material particles, e.g. graphite LFP, NMC and LiCO, as well as excellent binding properties to further optional additives, such as conductivity enhancing additives, in particular carbon black, single wall carbon nanotoubes (SWCNT) and multiwall carbon nanotubes (MWCNT), make the composition of the present invention highly useful for producing battery electrodes by means of a dry state process, i.e. without requiring the formation of a slurry.

The ionomeric polymer can be a copolymer having structural units derived from at least one olefin-based monomer and structural units derived from at least one an acid-group-containing monomer. More specifically, the olefin-based monomer can be ethylene, vinyl acetate, styrene, acrylonitrile or butyl acrylate. Most specifically, the olefin-based polymer is ethylene. The copolymer can be fluorine free. It was observed that a fluorine free copolymer can exhibit particularly good adhesion to active material particles and other additives. Further, clusters of ionic groups and counterions can be distributed more homogenously in such a fluorine free copolymer, compared to fluorine-based copolymers based on tetrafluoroethylene and further monomers having sulfonic acid groups, e.g. copolymers referred to as Nafion.

The acid-group in the acid-group-containing monomer can be more specifically a carboxylic-acid-group, phosphate-group or a sulfonic-acid-group, in particular a carboxylic-acid-group. Even more specifically, the acid-group-containing monomer can be one selected from the group consisting of acrylic acid, methacrylic acid, crotonic acid, itaconic acid, fumaric acid, malic acid, citraconic acid, vinyl acetic acid, allyl acetic acid, and salts, esters or anhydrides thereof, in particular from the group consisting of acrylic acid, methacrylic acid, salts and esters thereof.

When referring herein to an acid-group-containing monomer, this relates also to salts of these acid groups. In such a salt, the acid-group is the anion which coordinates to a cation, i.e. the acid-group is an ionic group provided on the macromolecular backbone of the polymer and it coordinates to a counter ion. The counter ion can be a metal cation or an organic cation.

The metal cation can be one selected from the group consisting of lithium(I), sodium(I), potassium(I), rubidium(I), cesium(I), magnesium(II), calcium(II), strontium(II), barium(II), zinc(II), iron(II), iron(III), copper(I), copper(II), cobalt(II), cobalt(III), nickel(II), manganese(II), manganese(III), titanium(IV), lanthanum(III), cerium(III), cerium(IV), yttrium(III) and mixtures thereof. The organic cation can be an onium ion, in particular one selected from the group consisting of ammonium ions, such as tetramethylammonium, tetraethylammonium, tetrabutylammonium, phosphonium ions, such as, tetrabutylphosphonium, sulfonium ions, such as, trimethylsulfonium, imidazolium ions, such as, 1-butyl-3-methylimidazolium, pyridinium ions, such as, N-methylpyridinium, pyrrolidinium ions, such as, N-butyl-N-methylpyrrolidinium. More specifically, the counter ion is lithium(I), sodium(I), or zinc (II), most specifically it is sodium(I).

In accordance with a specific embodiment of the present invention, the ionomer is a copolymer having repeating units derived from ethylene and at least one of acrylic acid and methacrylic acid. In this context, the acrylic acid and/or methacrylic acid derived repeating units form at least to a certain degree a salt, with lithium(I) or sodium(I) as counter ion, most specifically with sodium(I) as counter ion. It was found that a copolymer having repeating units derived from ethylene and at least one of acrylic acid and methacrylic acid is electrochemically stable, i.e. it can be expected that there is no degradation of the binder during operation of a battery for which the composition of the present invention has been used during manufacturing. For obtaining good adhesion to the active material particles and optional further additives, the ionomeric polymer can be fluorine free.

In the ionomeric polymer the amount of the structural unit derived from an acid-group-containing monomer can be 15 mol-% or less, in particular 10 mol-% or less, based on the total of monomers constituting the ionomeric polymer. By providing such a low number of acid-groups, the clusters formed within the ionomeric polymer when in a solid state, are encapsulated by the other parts of the copolymer, in particular by the parts derived from an olefin-based monomer. It was found that in such a case, the binder does not advance corrosion of a current collector onto which the composition is applied to. The lower limit of the acid-group-containing monomer derived structural unit is not particularly limited, as long as a sufficiently strong crosslinking is obtained, the lower limit can be 0.5 mol-%, in particular 1.0 mol-%, based on the total of monomers constituting the ionomeric polymer.

In the ionomeric polymer, the degree of neutralization of the structural unit derived from an acid-group-containing monomer can be in the range of 10% to 100% in particular from 30% to 70%. The degree of neutralization of an ionomeric polymer reflects how many of the acidic functional groups (e.g. -COOH, -SO₃H, -PO₃H₂) have been neutralized with counterions (e.g. Na⁺, Li⁺, etc.) to form ionic sites. The degree of neutralization of the ionomeric polymer may be determined by acid-base titration, and is typically expressed as the molar percentage of neutralized acidic groups relative to the total number of acidic groups present in the polymer. Alternatively, the degree of neutralization may be determined by elemental analysis of counterions (e.g. by ICP-OES), or spectroscopic methods such as FTIR or NMR. During cycling of a battery, including an electrode with such an ionomeric polymer as a binder, the degree of neutralization may increase up to 100%.

The weight average molecular weight of the ionomeric polymer can be in the range from 1,000 g/mol to 250,000 g/mol, in particular from 10,000 g/mol to 60,000 g/mol, in particular from 12,000 g/mol to 50,000 g/mol. The weight-average molecular weight (Mw) of the ionomeric polymer can be determined by gel permeation chromatography (GPC), optionally using dimethylformamide (DMF) or dimethyl sulfoxide (DMSO) with lithium bromide (LiBr) as eluent to suppress ionic aggregation. Calibration may be performed using polystyrene standards, or alternatively, absolute molecular weights can be determined using multi-angle light scattering (MALS) detection.

The ionomeric polymer can be a linear polymer, in particular obtained from catalytic polymerization, e.g. based on Ziegler-Natta catalysts or metallocene catalysts. Alternatively, the ionomer is a branched polymer, in particular obtained by radical polymerization. Suitable examples for ionomeric polymers are available under the tradename Surlyn^{®} (DOW)

The composition of the present invention can optionally comprise (d) a further polymer, in particular a polyolefin, such as polyethylene, polypropylene or EPDM rubber (ethylene propylene diene monomer rubber), in particular linear polyethylene having a weight average molecular weight of 100,000 g/mol or higher, which can be determined by GPC. Addition of such a further polymer can provide mechanical reinforcement or an increased flow transition temperature.

The amount of the further polymer is not particularly limited, it can be 15% by weight or less, based on the total weight of the ionomer polymer and the further polymer.

Moreover, the composition of the present invention comprises (c) a conductivity enhancing additive. This can be at least one of carbon black, SWCNT and MWCNT, in particular this is carbon black. Thereby, electric conductivity between active material particles connected via the binder is reduced, resulting in an improved reduction of the internal resistance of the electrode obtained from such a composition. The addition of the conductivity enhancing additive is optional. If a three-dimensional current collector, based on a fleece of metal fibers, metal foams or a mesh of metal, the particles of the active material can be in direct contact with the three-dimensional current collector, such that no further conductivity enhancing additive is required. Nevertheless, even in such cases with a three-dimensional current collector, it may be advantageous to add the conductivity enhancing additive.

The amount of active material particles in the composition of the present invention can be in the range of 90 to 98% by weight, based on the total weight of the composition.

The electrochemically active material particles can be particles of an anode material or of a cathode material. Suitable anode materials can be any of graphite, graphitized silicon, pure silicon, lithium titanate (Li₄Ti₅O₁₂), or lithium metal. Suitable cathode materials can be based on metal oxides, including lithium cobalt oxide (LCO), nickel manganese cobalt oxide (NMC), nickel cobalt manganese oxide (NCM), and lithium iron phosphate (LFP). Good adhesion of the ionomeric polymer described herein, to these active material particles can be achieved, in particular when the ionomeric polymer is a copolymer having olefin based structural units and structural units including carboxylic acid functional groups or salts thereof.

More specifically, the ionomeric polymer can be present in the form of composite particles, including the ionomeric polymer and the conductivity enhancing additive. The conductivity enhancing additive can be arranged on the surface and/or in the bulk of these composite particles. This in turn allows a reduction of such conductivity enhancing additives allowing the manufacturing of battery electrodes having a higher capacity per weight. The amount of the conductivity enhancing additive in the composite particles can be adjusted such that a maximum electric conductivity is achieved without an embrittling of the ionomeric polymer. More specifically, an amount of ionomeric polymer within the composite particles is 40 to 70 wt.-%, based on the total weight of the composite particles, and the amount of the conductivity enhancing additive can be in the range of 30 to 60 wt.-%, also based on the total weight of the composite particles.

Further, in the composition of the present invention, the size ratio of composite particles to active material particles can be in the range of 1:50 to 1:1, in particular from 1:25 to 1:2, in particular from 1:10 to 1:2, it can be for example 1:5. By providing composite particles that are smaller in size than the active material particles, a homogenous distribution of the binder within the active material can be obtained. Thereby, the mechanical stability of the entire active material layer is homogenously increased by the binder, while an accumulation of excess binder, which could be disadvantageous to the internal resistance, is avoided. In contrast, conventional solvent based binder systems result in binder migration, wherein binder concentration is not homogenous throughout the thickness of the electrically active material layer. This has for example been reported by Müller et al. in "Investigation of binder distribution in graphite anodes for lithium-ion batteries", published in Journal of Power Sources, Volume 340, 1 February 2017, Pages 1-5.

The particle size of active material particles can be 50 µm or less, in particular 20 µm or less, in particular 15 µm or less, in particular 10 µm or less. Smaller particles provide a larger surface area and a smaller electric pathway throughout the active material itself. The lower limit of the active material particles is not particularly limited. The active material can have a size of 0.10 µm or more, 0.50 µm or more.

According to one embodiment, the composition of the present invention is free of fluorine containing compounds. By avoiding the use of fluorine compounds, environmental concerns regarding per- and polyfluoroalkyl substances (PFSA) are avoided. Further, these fluorine containing substances, such as PVDF require the use of solvents, such as N-methylpyrrolidone (NMP), a toxic and potentially carcinogenic solvent. Accordingly, by avoiding fluorine containing compounds, the need for expensive handling systems and personal protective equipment can be eliminated or at least reduced.

Another aspect of the present invention relates to the use of an ionomeric polymer, in particular of the composition described above, for producing an electrode of a battery. Details of the ionomeric polymer described above, apply also to said use. The battery can be a battery which cycles metal ions. Specific examples are lithium ion batteries and sodium ion batteries. The lithium ion battery can be for example a lithium-gel battery or a lithium-polymer battery. The ionomeric polymer is in particularly used as a binder for electrochemically active material particles for producing an electrode of a battery.

Another aspect of the present invention relates to a method of producing a battery electrode, comprising the steps of: (A) providing a current collector, (B) applying the composition described above onto the current collector, (C) applying pressure to the coated current collector, (D) heating the coated current collector to a temperature above the melting temperature of the ionomeric polymer, and (E) a step of cooling the current collector.

By applying a composition described above, a mechanically stable electrochemically active material layer is obtainable which has a low internal resistance. During fabrication/assembly at elevated temperature, clusters of ionic groups and counter ions within the ionomeric polymer disintegrate and the material starts to flow easily. Upon cooling, these clusters form again and the ionomeric polymer adheres to active material particles similar to a hot melt adhesive, thereby providing a strong binding effect.

The steps (A) to (E) can be carried out in the order from (A) to (E). The pressure applied in step (C) can be maintained during the heating in step (D) and optionally also during cooling in step (E), more specifically, the pressure applied in step (C) is maintained during the heating step (D). Alternatively, the pressure can be released before heating and/or cooling.

According to one embodiment, in step (B) the composition of the present invention described herein can be applied as a slurry, wherein the slurry comprises a solvent or a mixture of solvents or a mixture of a solvent and a non-solvent, wherein optionally the solvent or mixture of solvents does not dissolve the ionomeric polymer but only swells the ionomeric solvent.

According to another embodiment, in step (B) the composition of the present invention described herein can be applied in a dry state or semi-dry state to the current collector, in particular in a dry state. A dry state herein indicates a state, in which the composition is free of solvent. A semi-dry state indicates a state in which a amount of solvent is present which does swell the ionomeric polymer but not dissolve it. More specifically, the method is a solvent free method, i.e. the composition is applied in a dry state and also the other steps (A) to (E) are carried out in the absence of any solvent. Even if solvents may be used for producing the ionomeric polymer or the composition including this ionomeric polymer, this production of the ionomeric polymer or the composition is not part of the claimed process of producing a battery electrode, i.e. the claimed process would still be solvent-free if no solvent is used during any of steps (A) to (E).

By producing the battery electrode in a solvent free manner, reduction of production costs is achieved since equipment for handling solvents and for personal protection can be avoided. In addition, as a solvent free process it can be more easily implemented in production facilities that are not equipped for handling solvents. Furthermore, due to omittance of solvents, the overall process is more environmentally friendly and can be carried out faster, since no time for evaporation of solvents is necessary. Regarding the produced battery electrode, when the electrochemically active material is applied in a conventional manner, i.e. as a slurry including a solvent, it is necessary to evaporate that solvent. The evaporation process not only requires time but may also result in voids and gaps within the final layer or electrochemically active material due to the solvent evaporation. Accordingly, application of dry or semi-dry composition can provide a more uniform electrolytically active material layer compared to conventional slurry-based processes.

The current collector which is provided in step (A) is not particularly limited. It can be a copper foil or an aluminum foil. Alternatively, it can also be a three-dimensional current collector. With three-dimensional (3D) current collector architectures, e.g. metal fiber meshes, metal foams, and structured multilayer films, within which the active material can be pervaded in all spatial directions by electrically conductive elements. For an example in EP 3 821 482 B1, the entire content of which is incorporated herein by reference, metal fiber based current collectors and their manufacturing are described in detail. When active materials are incorporated into a 3D metal fiber network composed of fine fibers, an interpenetrating composite is formed. Provided that the mesh size of the fiber network does not exceed 200 µm, the maximum distance electrons must travel through the active material to reach a current-collecting pathway remains below 100 µm, independent of electrode thickness. Furthermore, recent research indicates that the proximity of lithium ions to electrically charged metal fibers enhances ionic transport along the fiber surfaces, exceeding the diffusion rates observed in free electrolyte solution, as described for example in WO 2022/237967 A1, the entire content of which is incorporated herein by reference. This design mitigates the electronic and ionic transport limitations observed in traditional layered electrodes.

In view of this, the current collector provided in step (A) can be a three-dimensional metal fiber network composed of fibers with mesh size not exceeding 200 µm. The metal fibers can be of copper or aluminum.

A further aspect of the present invention relates to a method for producing a composition for producing an electrode of a battery. The composition for producing an electrode of a battery is in particular in accordance with the composition of the present invention described herein. The method comprises the steps of: (i) micronizing an ionomeric polymer and (ii) mixing the micronized ionic polymer with active material particles.

In the method for producing said composition, step (i) can include dissolving the ionomeric polymer and subsequently precipitating the dissolved ionomeric polymer to obtain a micronized ionomeric polymer. According to one embodiment, the ionomeric polymer is mixed with a conductivity enhancing additive prior to precipitation. With the ionomeric polymer being mixed with the conductivity enhancing additive, while the ionomeric polymer is dissolved, during precipitation of the ionomeric polymer, the conductivity enhancing additive is entrapped in the precipitate of ionomeric polymer. Thereby, composite particles having a uniform distribution of the conductivity enhancing additive can be obtained. In consequence, the mixture of ionomeric polymer and conductivity enhancing additive has excellent properties regarding mechanical fixation of the active material particles as well in regard to electric conductivity.

Also part of the present invention is a battery including an electrode obtained with a composition as described herein or including at least one electrode obtained by the method described herein for producing an electrode of a battery

Next the present invention will be described by reference to figures and specific examples, which have illustrative purposes and do not limit the scope of the present invention. In the Figures the following is shown:
- Fig. 1: shows a schematic illustration of an ionomeric binder in combination with a further polymer.
- Fig. 2: shows scanning electron microscopy images of composite particles and of a pressed film made of such composite particles.

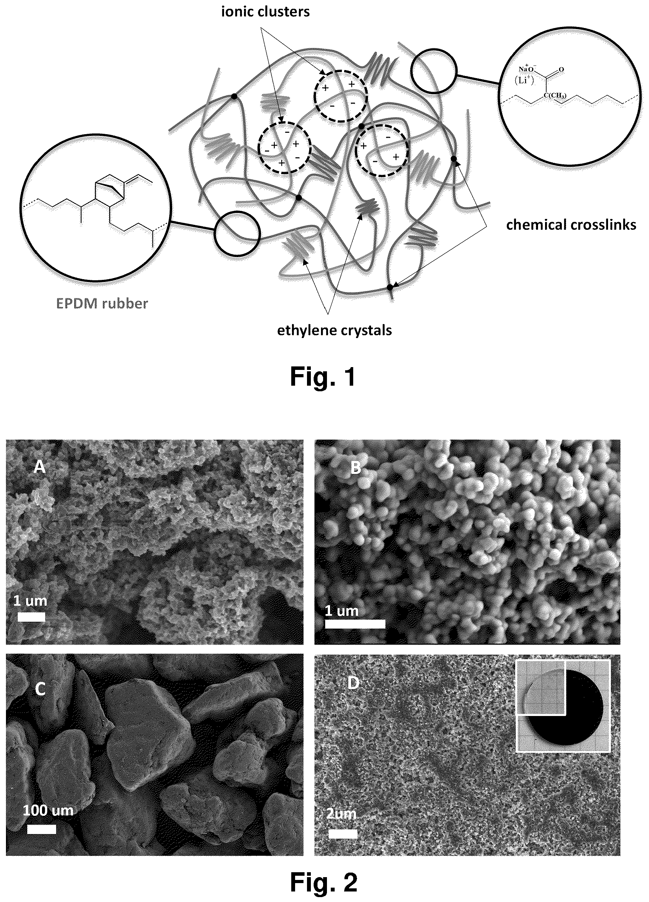

In Fig. 1, it is illustrated how the ionomeric polymer is thermoreversibly crosslinked by forming ionic clusters. These clusters are an aggregation of anionic groups that are attached to the backbone of the ionomeric polymer's backbone. Another thermoreversible crosslink, which is not shown in Fig. 1, can occur of backbone segments form ethylene crystals, in particular if such ethylene crystal contains segments of more than one backbone. Further, the whole structure can be additionally stabilized when a further polymer, in particular one that can covalently crosslink, such as EPDM is added.

### Examples:

### Example 1. Preparation of a micronized ionomer-CB composite particles

45 g of the ionomer (Surlyn 1802, or Surlyn PC 2000, DOW) were added to 600 mL of a mixture of 1-butanol and toluene (1:9) at 65 °C. When the ionomer was fully dissolved, carbon black (45 g) was added and the mixture was homogenized by a by a Dispermat^{®} disperser (Getzmann). The warm dispersion was slowly added to 1,5 L of methanol having a temperature of 0°C and containing 15% water under continuous and intense agitation. CB got coprecipitated together with the ionomer. The coprecipitated composite was kept in the cooled dispersion to allow maximum solidification of the ionomer, before it was collected by filtration and dried at ambient temperature under vacuum to yield the ionomer-carbon black composite particles.

Scanning electron microscopy images of composite particles according to example 1 are shown in Fig. 2. In upper left section A, a nanoscopic mixture of ionomeric polymer binder and carbon black is shown, wherein the carbon black particles have a size of 40 nm. Upper right section B and lower left section (C) show composite particles that were obtained by the same process, however, with different particle sizes due to adjusted conditions during dispersion forming. In the lower right section (D) the surface of a pressed film obtained from these composite particles is shown, wherein a pressure of 1 N/cm² was applied. In section (D), the squares of the background have a side length of 5 mm. The inset shows a pressed film of composite particles with carbon black and the upper left quadrant of the inset shows a pressed film of ionomeric polymer binder particles without carbon black.

### Example 2. Preparation of a micronized ionomer-CB-Graphite composition

45 g of the ionomer (Surlyn 1802, or Surlyn PC 2000, DOW) were added to 600 mL of a mixture of 1-butanol and toluene (1:9) at 65 °C. When the ionomer was fully dissolved, carbon black (45 g) was added and the mixture was homogenized by a by a Dispermat^{®} disperser (Getzmann). The warm dispersion was slowly added to 1,5 L of methanol having a temperature of 0°C and containing 15% water under continuous and intense agitation. CB got coprecipitated together with the ionomer. The coprecipitated composite includes ionomer-carbon black composite particles and was kept in the dispersion under continuous and intense agitation. In a subsequent step, graphite particles (BTR BFC-H21) were added to the dispersion at a concentration of 90 to 98 wt.-% based on the total weight of ionomer, carbon black and graphite particles and a slurry was obtained. It was observed that particle size distribution of the micronized CB-lonomer composite particles and their adhesion to the graphite particles can be adjusted by the choice of the temperature and the dispersion conditions and time.

### Example 3. Preparation of a micronized ionomer-EPDM-CB-Graphite composition

At 65 °C, 14 g of Surlyn PC2000 was dissolved in 380 mL of a mixture of butanol-1 and toluene (1: 9). To obtain a crosslinkable polymer blend, 6 g of EPDM and 30 mg of dicumyl peroxide in 40 mL of the same solvent mixture was added. When the polymers were fully dissolved, carbon black (20 g) was added and the mixture was homogenized while the temperature was kept constant by a by a Dispermat^{®} disperser (Getzmann). The warm dispersion was slowly added to 1 L of methanol having a temperature of 0°C and containing 15% water under continuous and intense agitation. CB got coprecipitated together with the polymer. The coprecipitated composite includes ionomer-carbon black composite particles and was kept in the dispersion under continuous and intense agitation. In a subsequent step, graphite particles (BTR BFC-H21) were added to the dispersion at a concentration of 90 to 98 wt.-% based on the total weight of ionomer, carbon black and graphite particles and a slurry was obtained. Particle size distribution of the micronized CB-lonomer particles and their adhesion to the graphite particles was adjusted by the choice of the temperature and the dispersion conditions and time.

### Example 4. Preparation of a micronized ionomer-CB-LFP composition

45 g of the ionomer (Surlyn 1802, or Surlyn PC 2000, DOW) were added to 600 mL of a mixture of 1-butanol and toluene (1:9) at 65 °C. When the ionomer was fully dissolved, carbon black (45 g) was added and the mixture was homogenized by a by a Dispermat^{®} disperser (Getzmann). The warm dispersion was slowly added to 1,5 L of methanol having a temperature of 0°C and containing 15% water under continuous and intense agitation. CB got coprecipitated together with the ionomer. The coprecipitated composite includes ionomer-carbon black composite particles and was kept in the dispersion under continuous and intense agitation. In a subsequent step, LFP particles (Ibuvolt LFP400 ) were added to the dispersion at a concentration and a slurry was obtained. Particle size distribution of the micronized CB-lonomer particles and their adhesion to the graphite particles was adjusted by the choice of the temperature and the dispersion conditions and time.

### Example 5. Anode formation

A slurry as prepared according to example 2 was employed to coat a 10 µm thick Cu-foil with a 200 µm thick active material coating by doctor blading. The coating was dried and subsequently the coated foil was calendered at a temperature of 110 to 195 °C to the final thickness and density of the active material coating.

### 6. Cathode formation

A slurry as prepared according to example 3 was employed to coat a 10 µm thick Al-foil with a 200 µm thick active material coating by doctor blading. The coating was dried and subsequently the coated foil was calendered at a temperature of 110-195°C to the final thickness and density of the active material coating.

### 7. Formation of dry micronized ionomer-EPDM-CB-Graphite composition powder

Diluted slurries as prepared by example 3 were dried by spray drying to yield a dry and flowable powder.

## Claims

1. Composition for producing an electrode of a battery, comprising:
(a) a binder comprising an ionomeric polymer,
(b) electrochemically active material particles, and
(c) a conductivity enhancing additive,
wherein the electrochemically active material particles are decorated with the ionomeric polymer.

2. Composition according to claim 1, wherein the ionomeric polymer is a copolymer having structural units derived from at least one olefin-based monomer and derived from at least one acid-group-containing monomer, in particular derived from a carboxylic-acid-group, phosphate-group or a sulfonic-acid-group containing monomer.

3. Composition according to claim 2,
wherein the olefin-based monomer is ethylene, vinyl acetate, styrene, acrylonitrile or butyl acrylate, in particular ethylene.

4. Composition according to claim 2 or 3,
wherein the acid-group-containing monomer is at least one selected from the group consisting of acrylic acid, methacrylic acid, crotonic acid, itaconic acid, fumaric acid, malic acid, citraconic acid, vinyl acetic acid, allyl acetic acid, and salts, esters or anhydrides thereof, in particular from the group consisting of acrylic acid, methacrylic acid, salts and esters thereof.

5. Composition according to at least one of the preceding claims,
wherein the ionomer is a copolymer of ethylene and of at least one of acrylic acid and methacrylic acid.

6. Composition according to at least one of claims 2 to 5,
wherein in the ionomeric polymer the amount of carboxylate-based monomer is in the range of 1 to 20 mol-%, in particular from 2 to 15 mol-%, in particular from 5 to 10 mol-% or less, based on the total of monomers constituting the ionomeric polymer.

7. Composition according to at least one of claims 2 to 6,
wherein the degree of neutralization of the acid-group-containing monomer is in the range of 10% to 80%, in particular from 30% to 70%.

8. Composition according to at least one of the preceding claims, molecular weight of the ionomer is in the range from 1,000 to 250,000, in particular from 10,000 g/mol to 60,000 g/mol, in particular from 30,000 to 50,000 g/mol.

9. Composition according to at least one of the preceding claims,
wherein the ionomer is a linear polymer, in particular obtained from catalytic polymerization, or
wherein the ionomer is a branched polymer, in particular obtained by radical polymerization.

10. Composition according to at least one of the preceding claims,
wherein the composition further comprises:
(d) a further polymer, in particular a polyolefin, such as polyethylene, polypropylene or EPDM rubber (ethylene propylene diene monomer rubber), optionally
wherein the amount of the further polymer is 15% by weight or less, based on the total weight of the ionomer polymer and the further polymer.

11. Composition according to at least one of the preceding claims,
wherein the (c) conductivity enhancing additive is at least one of carbon black, SWCNT or MWCNT, in particular carbon black.

12. Composition according to at least one of the preceding claims,
wherein the amount of active material particles is in the range of 90 to 98% by weight, based on the total weight of the composition.

13. Composition according to at least one of the preceding claims,
wherein the ionomeric polymer is present in the form of composite particles, including the ionomeric polymer and the conductivity enhancing additive, optionally
wherein in the composite particles, the amount of ionomeric polymer is 40 to 70 wt.-%, based on the total weight of the composite particles.

14. Composition according to at least one of the preceding claims,
wherein in the composition, the size ratio of composite particles to active material particles is in the range of 1:50 to 1:1, in particular from 1:25 to 1:2, in particular from 1:10 to 1:2, for example 1:5.

15. Composition according to at least one of the preceding claims,
wherein the particle size of active material particles is 50 µm or less, in particular 20 µm or less, in particular 15 µm or less, in particular 10 µm or less.

16. Composition according to at least one of the preceding claims,
wherein the composition is free of fluorine containing compounds.

17. Use of an ionomer, in particular the composition according to at least one of the preceding claims, for producing an electrode of a battery.

18. Method of producing a battery electrode,
comprising the steps of:
(A) providing a current collector,
(B) applying the composition according to at least one of claims 1 to 15 onto the current collector,
(C) applying pressure to the coated current collector,
(D) heating the coated current collector to a temperature, above the melting temperature of the ionomeric polymer, and
(E) a step of cooling the current collector.

19. Method according to claim 18,
wherein in step (B) the composition according to at least one of claims 1 to 15 is applied as a slurry, wherein the slurry comprises a solvent or a mixture of solvents, wherein optionally the solvent or mixture of solvents does not dissolve the ionomeric polymer but only swells the ionomeric solvent, or wherein in step (B) the composition according to at least one of claims 1 to 15 is applied in a dry state or semi-dry state to the current collector.

20. Method according to claim 18 or 19,
wherein the method is a solvent free method.

21. Method for producing a composition for producing an electrode of a battery, in particular according to at least one of claims 1 to 16,
wherein the method comprises the steps of:
(i) micronizing an ionomeric polymer and
(ii) mixing the micronized ionic polymer with active material particles.

22. Method according to claim 21,
wherein step (i) includes dissolving the ionomeric polymer and subsequently precipitating the dissolved ionomeric polymer to obtain a micronized ionomeric polymer.

23. Method according to claim 22,
wherein the ionomeric polymer is mixed with a conductivity enhancing additive prior to precipitation, followed by coprecipitation to provide composite particles, including the ionomeric polymer and the conductivity enhancing additive.
